# EUROPEAN PATENT SPECIFICATION

(11) **EP 2 704 441 B1**
(45) Date of publication and mention of the grant of the patent: **02.09.2015**
(21) Application number: 13191882.3
(22) Date of filing: 13.04.2011
(51) Int. Cl.: H04N 19/537, H04N 19/119, H04N 19/46, H04N 19/463, H04N 19/543

(54) **Method and device for video encoding using geometry adaptive block partitioning**
Verfahren und Vorrichtung zum Videocodierung mittels geometrieadaptiver Blockpartitionierung
Procédé et dispositif pour le codage vidéo utilisant le partage de blocs à géométrie adaptative

(30) Priority: 15.04.2010 CN 201010150083
(43) Date of publication of application: 05.03.2014
(62) Divisional of application: 11768431.6
(73) Proprietor: Huawei Technologies Co., Ltd., Longgang District Shenzhen, Guangdong 518129 (CN)
(72) Inventor: YU, Haoping, Shenzhen Guangdong 518129 (CN); ZHENG, Xiaozhen, Shenzhen Guangdong 518129 (CN); LIN, Sixin, Shenzhen Guangdong 518129 (CN); ZHOU, Jiantong, Shenzhen Guangdong 518129 (CN)
(74) Representative: Thun, Clemens

(56) References cited:
- WO-A2-2009/051719
- VERMEIRSCH K ET AL: "New MB bipartitioning modes for inter coding", 34. VCEG MEETING; 83. MPEG MEETING; 12-1-2008 - 13-1-2008; ANTALYA;(VIDEO CODING EXPERTS GROUP OF ITU-T SG.16),, no. VCEG-AH25, 9 January 2008 (2008-01-09) , XP030003563, ISSN: 0000-0138
- GBP OSCAR DIVORRA ET AL: "Geometry-adaptive Block Partioning", 32. VCEG MEETING; 80. MPEG MEETING; 23-4-2007 - 27-4-2007; SAN JOSE;(VIDEO CODING EXPERTS GROUP OF ITU-T SG.16),, no. VCEG-AF10, 19 April 2007 (2007-04-19), XP030003531, ISSN: 0000-0068
- ZHENG (HISILICON) X ET AL: "Flexible macroblock partition for inter-frame coding", 1. JCT-VC MEETING; 15-4-2010 - 23-4-2010; DRESDEN; (JOINTCOLLABORATIVE TEAM ON VIDEO CODING OF ISO/IEC JTC1/SC29/WG11 AND ITU-TSG.16 ); URL: HTTP://WFTP3.ITU.INT/AV-ARCH/JCTVC-SITE/,, 24 April 2010 (2010-04-24), XP030007520, ISSN: 0000-0049

## Description

### FIELD OF THE INVENTION

The present invention relates to the field of communications technologies, and in particular, to image encoding and decoding methods and related devices.

### BACKGROUND OF THE INVENTION

To reduce the bandwidth required for transferring video data as much as possible, multiple video compression methods may be selected to compress video data. The video compression methods include: intra-frame compression and inter-frame compression. Currently an inter-frame compression method based on motion estimation is often selected. Specifically, the process that an inter-frame compression method is selected at an image encoder to compress and encode an image includes: an encoder partitions an image block to be encoded into several sub-image blocks of equal sizes, for each sub-image block, searches a reference image for an image block that matches with the current sub-image block most as a prediction block, performs subtraction on corresponding pixel values of the sub-image block and the prediction block to obtain a residual, performs entropy encoding on a value obtained after transform and quantization of the residual, and in the end sends to a decoder a bitstream obtained through entropy encoding and motion vector information together. The motion vector information indicates a position difference between the current sub-image block and the prediction block. At the decoder for an image, an entropy encoded bitstream is first acquired to perform entropy decoding to obtain a corresponding residual and corresponding motion vector information, a corresponding matching image block (namely, the prediction block) is then acquired from the reference image according to the motion vector information, and the values of corresponding pixel points in the image block and the residual value are added to obtain a current sub-image block.

During the process, an encoder needs to partition an image block to be encoded into some sub-image blocks. For example, a horizontal partition manner or a vertical partition manner may be selected to partition an image block into two rectangular sub-image blocks. Alternatively, a partition manner from lower left to upper right or a partition manner from lower right to upper left may be selected to partition an image block into two sub-image blocks, in which one sub-image block is a triangle. In the prior art, two parameters are selected for identification, in which a numerical value such as 1, 2, 3, 4, ..., is selected for one parameter to identify a partition manner, for example, 1 identifies horizontal partition, 2 identifies vertical partition, 3 identifies a partition manner at 45 degrees from lower left to upper right, 4 identifies a partition manner at 45 degrees from lower right to upper left, 5 identifies a partition manner at 30 degrees from lower left to upper right, 6 identifies a partition manner at 30 degrees from lower right to upper left, and the like; the other parameter identifies the position of a sub-image block endpoint. Further, WO 2009/051719 A2 refers to an encoding method for encoding image data, wherein the image data are formed by a geometric partitioning. In particular there, a line defining a partition is defined by an angle and a distance of the line to a center of an image block. XP 030003563 refers to macroblock bipartitioning modes for inter coding. In particular, four classes as diagonal up, diagonal down, horizontal and vertical partitioning are described. XP 030003531 refers to geometry adaptive block partitioning. In particular, there a line defining a partition is defined by an angle and a distance of the line to a center of an image block.

The prior art has the following disadvantages.

In the two parameters selected in the prior art, the first parameter identifies a partition manner, and as at least 4 partition manners (horizontal partition, vertical partition, partition at 45 degrees from lower left to upper right, and partition at 45 degrees from lower right to upper left) need to be identified, the parameter at least needs two bits. The bit count of the parameter for identifying a sub-image block obtained by partitioning an image block is the sum of the bit count of the first parameter and the bit count of the second parameter, so that the number of bits occupied thereof is large.

The first parameter identifies a partition manner. A different numerical value is needed to identify partition at a different angle, for example, 4 identifies the partition manner at 45 degrees from lower right to upper left, 5 identifies a partition manner at 30 degrees from lower left to upper right, 6 identifies a partition manner at 30 degrees from lower right to upper left, and the like. Generally speaking, the first parameter does not select many bits, so that only a limited number of angle values are capable of being identified, resulting in limited types of partition when a partition manner from lower right to upper left or from lower left to upper right is selected.

### SUMMARY OF THE INVENTION

The embodiments of the present invention provide image encoding and decoding methods and related devices, so that the bit count needed for a parameter for identifying a sub-image block obtained by partitioning an image block is reduced or the types of partition are not limited when a partition manner from lower right to upper left or from lower left to upper right is selected.

Accordingly, an embodiment of the present invention provides:

An image encoding method includes:
for a sub-image block obtained by partitioning an image block, determining at least two position parameters, where the at least two position parameters include a first position parameter and a second position parameter, the absolute value of the first position parameter and the absolute value of the second position parameter each identify the distance from an endpoint of a boundary of the sub-image block to a corresponding reference endpoint, the boundary of the sub-image block is not on a boundary of the image block, the corresponding reference endpoint is an endpoint, being a intersection between boundaries of the image block, on the image block that is located on a same boundary as the endpoint of the boundary of the sub-image block, the sign of the first position parameter and the sign of the second position parameter jointly identify the position of the sub-image block in the image block; and
encoding the at least two position parameters,wherein:
   when the first position parameter and the second position parameter are both specific numerical values and therefore the image block is divided into two equal triangles, the at least two position parameters further comprise: a third position parameter;
   the determining at least two position parameters further comprises:
   determining the third position parameter according to whether a partition manner of the image block is a partition manner from lower left to upper right or a partition manner from lower right to upper left.

An image decoding method includes:
acquiring a bitstream, and decoding at least two position parameters from the bitstream, where the at least two position parameters include a first position parameter and a second position parameter, the absolute value of the first position parameter and the absolute value of the second position parameter each identify the distance from an endpoint of a boundary of the sub-image block to a corresponding reference endpoint, the boundary of the sub-image block is not on a boundary of the image block, the corresponding reference endpoint is an endpoint, being a intersection between boundaries of the image block, on the image block that is located on a same boundary as the endpoint of the boundary of the sub-image block,
and the sign of the first position parameter and the sign of the second position parameter jointly identify the position of the sub-image block in the image block; and
   determining, according to the at least two position parameters, information of the sub-image block obtained by partitioning the image block, wherein:
   when the absolute value of the first position parameter and the absolute value of the second position parameter are both specific numerical values, the at least two position parameters further comprise a third position parameter;
   the determining, according to the at least two position parameters, the sub-image block obtained by partitioning the image block comprises:
   according to the first position parameter and the second position parameter, determining that the sub-image blocks obtained by partitioning the image block are two equal triangles;
   according to the third position parameter, determining which one of a partition manner at 45 degrees from upper right to lower left and a partition manner at 45 degrees from upper left to lower right is selected for the image block.

An image encoding device includes:
a parameter determination unit, configured to: for a sub-image block obtained by partitioning an image block, determine at least two position parameters, where the at least two position parameters include a first position parameter and a second position parameter, the absolute value of the first position parameter and the absolute value of the second position parameter each identify the distance from an endpoint of a boundary of the sub-image block to a corresponding reference endpoint, the boundary of the sub-image block is not on a boundary of the image block, the corresponding reference endpoint is an endpoint, being a intersection between boundaries of the image block, on the image block that is located on a same boundary as the endpoint of the boundary of the sub-image block, and the sign of the first position parameter and the sign of the second position parameter jointly identify the position of the sub-image block in the image block; and
   an encoding unit, configured to encode the at least two position parameters, wherein:
   the parameter determination unit further comprises:
      a parameter determination subunit, configured to: when the first position parameter and the second position parameter are both specific numerical values, determine a third position parameter according to whether a partition manner of the image block is a partition manner from lower left to upper right or a partition manner from lower right to upper left.

An image decoding device includes:
a decoding unit, configured to acquire a bitstream, and decode at least two position parameters from the bitstream, where the at least two position parameters include a first position parameter and a second position parameter, the absolute value of the first position parameter and the absolute value of the second position parameter each identify the distance from an endpoint of a boundary of the sub-image block to a corresponding reference endpoint, the boundary of the sub-image block is not on a boundary of the image block, the corresponding reference endpoint is an endpoint, being a intersection between boundaries of the image block, on the image block that is located on a same boundary as the endpoint of the boundary of the sub-image block, and the sign of the first position parameter and the sign of the second position parameter jointly identify the position of the sub-image block in the image block; and
a sub-image block determination unit, configured to determine, according to the at least two position parameters, information of the sub-image block obtained by partitioning the image block, wherein:
   when the absolute value of the first position parameter and the absolute value of the second position parameter are both specific numerical values, the at least two position parameters further comprise a third position parameter; and
   the sub-image block determination unit further comprises:
      a sub-image block determination subunit, configured to: when the absolute value of the first position parameter and the absolute value of the second position parameter are both specific numerical values, according to the third position parameter, determine which one of a partition manner at 45 degrees from upper right to lower left and a partition manner at 45 degrees from upper left to lower right is selected for the image block.

Another embodiment of the present invention selects at least two position parameters to identify a sub-image block obtained by partitioning an image block, in which the absolute values of the two position parameters identify the distance from an endpoint of a boundary of the sub-image block to a corresponding reference endpoint, the boundary of the sub-image block is not on a boundary of the image block, the signs of the two position parameters jointly identify the position of the sub-image block in the image block, and by using the two position parameters, instead of being limited to an angle like 45 degrees, any partition type may be identified when a partition manner from lower right to upper left or from lower left to upper right is selected.

### BRIEF DESCRIPTION OF THE DRAWING

To describe the technical solutions in the embodiments of the present invention more clearly, the following briefly introduces the accompanying drawings for describing the embodiments. Apparently, the accompanying drawings in the following description show merely some embodiments of the present invention, and persons of ordinary skill in the art may still derive other drawings from the accompanying drawings without creative efforts.
FIG. 4A is a flow chart of an image encoding method provided in an embodiment of the present invention;
FIG. 4B is a flow chart of an image decoding method provided in another embodiment of the present invention;
FIG. 5A is a schematic view of partition in a partition manner at 45 degrees from upper right to lower left provided in an embodiment of the present invention;
FIG. 5B is another schematic view of partition in a partition manner at 45 degrees from upper right to lower left provided in an embodiment of the present invention;
FIG. 5C is a schematic view of partition in a partition manner at 45 degrees from upper left to lower right provided in an embodiment of the present invention;
FIG. 5D is a schematic view of partition in a partition manner at 45 degrees from upper left to lower right provided in an embodiment of the present invention;
FIG. 6 is a flow chart of an image encoding and decoding method based on a partition manner from upper right to lower left or a partition manner from upper left to lower right provided in an embodiment of the present invention;
FIG. 9 is a structural view of an image encoding device provided in an embodiment of the present invention;
FIG. 10 is a structural view of an image encoding device provided in another embodiment of the present invention;
FIG. 11 is a structural view of an image decoding device provided in an embodiment of the present invention; and
FIG. 12 is a structural view of an image decoding device provided in another embodiment of the present invention.

### DETAILED DESCRIPTION OF THE EMBODIMENTS

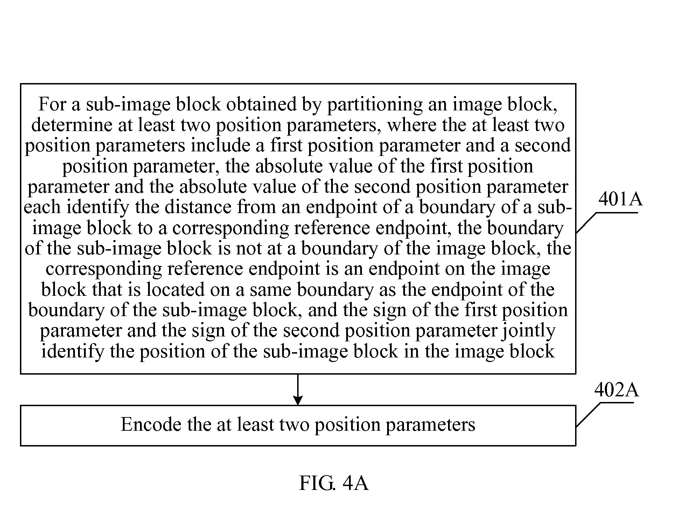

Referring to FIG. 4A, an embodiment of the present invention provides an image encoding method, and the method includes:

401A: For a sub-image block obtained by partitioning an image block, determine at least two position parameters, where the at least two position parameters include a first position parameter and a second position parameter, the absolute value of the first position parameter and the absolute value of the second position parameter each identify the distance from an endpoint of a boundary of the sub-image block to a corresponding reference endpoint, the boundary of the sub-image block is not on a boundary of the image block, the corresponding reference endpoint is an endpoint on the image block that is located on a same boundary as the endpoint of the boundary of the sub-image block, and the sign of the first position parameter and the sign of the second position parameter jointly identify the position of the sub-image block in the image block.

Specifically, according to the endpoint information of the boundary of the sub-image block, the partition manner of the image block, and two reference endpoints, determine the position of the sub-image block in the image block, the absolute value of the first position parameter, and the absolute value of the second position parameter. When the sub-image block at the upper left corner or the sub-image block at the lower right corner in the image block is a triangle, two reference endpoints include: a first endpoint and a second endpoint, in which the first endpoint is the intersection between the upper boundary and the right boundary of the image block, and the second endpoint is the intersection between the lower boundary and the left boundary of the image block. When the sub-image block at the upper right corner or the sub-image block at the lower left corner in the image block is a triangle, the two reference endpoints include: a third endpoint and a fourth endpoint, in which the third endpoint is the intersection between the upper boundary and the left boundary of the image block, and the fourth endpoint is the intersection between the lower boundary and the right boundary of the image block. According to the position of the sub-image block in the image block, the sign of the first position parameter and the sign of the second position parameter are determined.

When the first position parameter and the second position parameter are both specific numerical values, the at least two position parameters further include: a third position parameter. The step further includes: determining the third position parameter. The specific numerical value may be 0 according to whether the partition manner of the image block is a partition manner from lower left to upper right or a partition manner from lower right to upper left.

402A: Encode the at least two position parameters.

Specifically, search a preset first-type code word mapping table for their respective code words of the position parameters, where in the first-type code word mapping table a probability that a position parameter to which a code 1 greater than a code 2 corresponds occurs is smaller than a probability that a position parameter to which the code word 2 corresponds occurs; or, search a preset second-type code word mapping table for one code word corresponding to the first position parameter and the second position parameter.

The embodiment of the present invention selects at least two position parameters to identify a sub-image block obtained by partitioning an image block, in which the absolute values of the two position parameters identify the distance from an endpoint of a boundary of the sub-image block to a corresponding reference endpoint, the boundary of the sub-image block is not on a boundary of the image block, the signs of the two position parameters jointly identify the position of the sub-image block in the image block, and by using the two position parameters, instead of being limited to an angle like 45 degrees, any partition type may be identified when a partition manner from lower right to upper left or from lower left to upper right is selected.

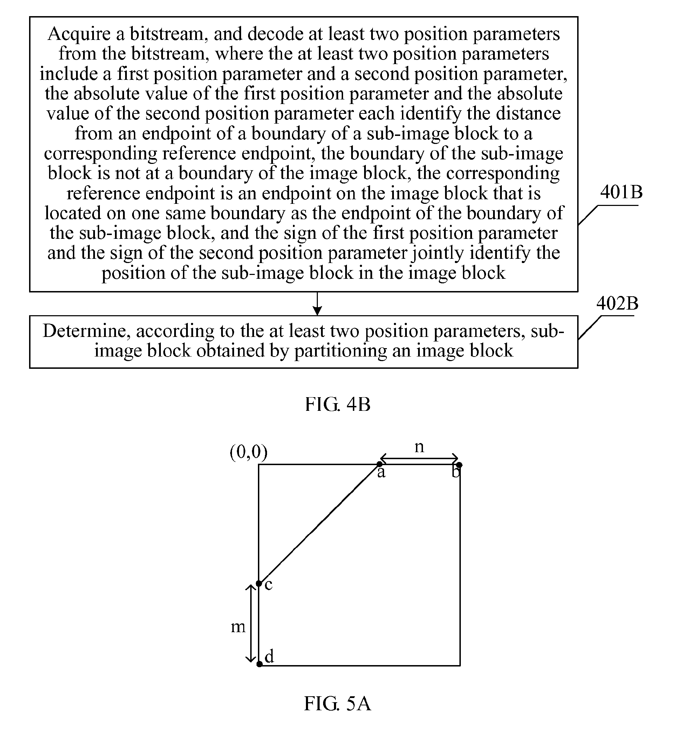

Referring to FIG. 4B, another embodiment of the present invention provides an image encoding method, and the method includes:

401B: Acquire a bitstream, and decode at least two position parameters from the bitstream, where the at least two position parameters include a first position parameter and a second position parameter, the absolute value of the first position parameter and the absolute value of the second position parameter each identify the distance from an endpoint of a boundary of the sub-image block to a corresponding reference endpoint, the boundary of the sub-image block is not on a boundary of the image block, the corresponding reference endpoint is an endpoint on the image block that is located on a same boundary as the endpoint of the boundary of the sub-image block, and the sign of the first position parameter and the sign of the second position parameter jointly identify the position of the sub-image block in the image block.

In the bitsteam, the code words corresponding to the first position parameter and the second position parameter are the code words in the second-type mapping table; or, the code word corresponding to the first position parameter and code word corresponding to the second position parameter in the bitstream are code words in the first-type code word mapping table, where in the first-type code word mapping table the probability that the position parameter corresponding to the code word 1 larger than the code word 2 occurs is smaller than the probability that the position parameter corresponding to the code word 2 occurs, and the first-type mapping table and the second-type mapping table are described in detail in the following.

402B: Determine, according to the at least two position parameters, a sub-image block obtained by partitioning an image block.

The information of the sub-image block includes information such as the partition manner of an image block, the position of a sub-image block in an image block, and which pixel points are included in the sub-image block.

Specifically, when neither the absolute value of the first position parameter nor the absolute value of the second position parameter is a specific numerical value, it is determined that one sub-image block obtained by partitioning the image block is a triangle and another sub-image block is a pentagon; the position of the triangle in the image block is determined according to the sign of the first position parameter and the sign of the second position parameter; according to the absolute value of the first position parameter, the absolute value of the second position parameter, and the position of the triangle in the image block, the endpoint information of the triangle boundary is determined. When the absolute value of the first position parameter and the absolute value of the second position parameter are both specific numerical values, the at least two position parameters further include a third position parameter. In the step, according to the first position parameter and the second position parameter, it is determined the sub-image blocks obtained by partitioning the image block are two triangles; and according to the third position parameter, it is determined whether the partition manner at 45 degrees from upper right to lower left or the partition manner at 45 degrees from upper left to lower right is selected for the image block. The specific numerical value may be 0.

The embodiment of the present invention selects at least two position parameters to identify a sub-image block obtained by partitioning an image block, in which the absolute values of the two position parameters identify the distance from an endpoint of a boundary of the sub-image block to a corresponding reference endpoint, the boundary of the sub-image block is not on a boundary of the image block, the signs of the two position parameters jointly identify the position of the sub-image block in the image block, and by using the two position parameters, instead of being limited to an angle like 45 degrees, any partition type may be identified when a partition manner from lower right to upper left or from lower left to upper right is selected.

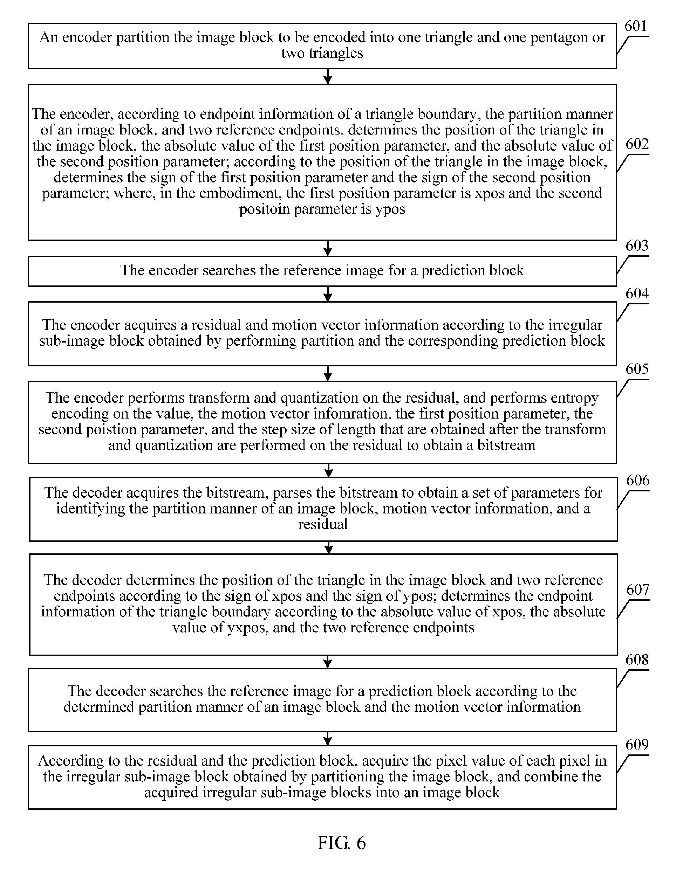

Referring to FIG. 6, another embodiment of the present invention provides an image encoding and image decoding method, in the embodiment, an image block to be encoded is partitioned into one triangle and one irregular sub-image block, the sub-image block may be a triangle or a pentagon, and the method specifically includes:

Step 601: An encoder partitions the image block to be encoded into one triangle and one irregular sub-image block according to the texture of an image, the boundary of an object, and the background boundary of an image, where the sub-image block may be a triangle or a pentagon.

Step 602: The encoder, according to endpoint information of a triangle boundary, the partition manner of an image block, and two reference endpoints, determines the position of the triangle in the image block, the absolute value of the first position parameter, and the absolute value of the second position parameter; when the sub-image block at the upper left corner or sub-image block at the lower right corner in the image block is a triangle, the two reference endpoints include: a first endpoint and a second endpoint, in which the first endpoint is the intersection between the upper boundary and the right boundary of the image block, and the second endpoint is the intersection between the lower boundary and the left boundary of the image block; when the sub-image block at the upper right corner or the sub-image block at the lower left corner in the image block is a triangle, the two reference endpoints include: a third endpoint and a fourth endpoint, in which the third endpoint is the intersection between the upper boundary and the left boundary of the image block, and the fourth endpoint is the intersection between the lower boundary and the right boundary of the image block; the sign of the first position parameter and the sign of the second position parameter are determined according to the position of the triangle in the image block; when both the first position parameter and the second position parameter are 0, the third position parameter is determined according to whether the partition manner of the image block is a partition manner from lower left to upper right or a partition manner from lower right to upper left, in which the third position parameter identifies whether the partition manner from lower left to upper right or the partition manner from lower right to upper left is selected to partition the image block into two triangles.

In the embodiment, it is assumed that first position parameter is xpos and the second position parameter is ypos. When the values of ypos and xpos are both 0, according to the principle, the image block is partitioned into two triangles of the same size. As an image block is capable of being partitioned into two triangles of the same size in a manner from lower left to upper right or a manner from lower right to upper left, here a parameter further needs to be encoded additionally, which is used for identifying which partition manner is selected to partition the image block into triangles, so a third position parameter is provided.

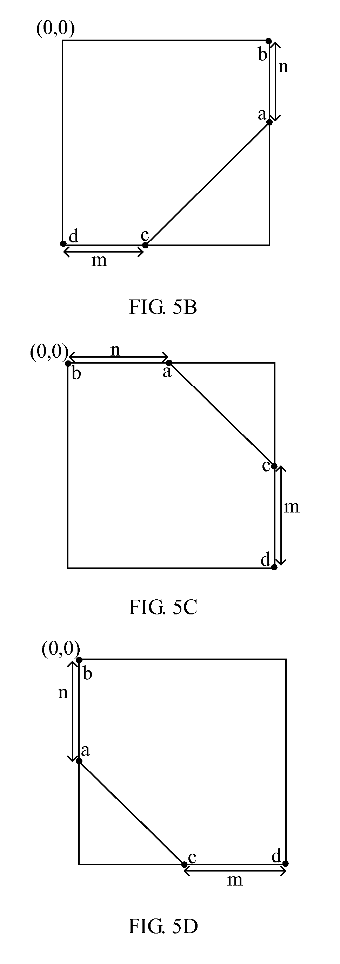

The selected irregular partition manner includes: (1) the partition from lower left to upper right, in which the sub-image block located at the upper left corner in the image block is a triangle, the partition method is shown in FIG. 5A; (2) partition from lower left to upper right, in which the sub-image block located at the lower right corner in the image block is a triangle, and the partition method is shown in FIG. 5B; (3) partition from lower right to upper left, in which the sub-image block located at the upper right corner in the image block is a triangle, and the partition method is shown in FIG. 5C; and (4) partition from lower right to upper left, in which the sub-image block located at the lower left corner in the image block is a triangle, and the partition method is shown in FIG. 5D. When the partition manners (1) and (2) are selected, the two reference endpoints include: a first endpoint and a second endpoint, in which the first endpoint is the intersection between the upper boundary and the right boundary of the image block to be encoded, as the point b shown in FIGs. 5(A) and 5(B), and the second endpoint is the intersection between the lower boundary and left boundary of the image block to be encoded, as the point d shown in FIGs. 5(A) and 5(B). When the partition manners (3) and (4) are selected, two reference endpoints include: a third endpoint and a fourth endpoint, in which the third endpoint is the intersection between the upper boundary and the left boundary of the image block to be encoded, as the point b shown in FIGs. 5(C) and 5(D), and the fourth endpoint is the intersection between the lower boundary and the right boundary of the image block to be encoded, as the point d shown in FIGs. 5(C) and 5(D).

Specifically, as shown in FIG. 5(A), when the partition manner (1) is selected, the two position parameters are (xpos, ypos), in which xpos = -m, ypos = -n, n indicates the distance from the intersection a between the triangle boundary (the triangle boundary is a hypotenuse that is not on the boundary of the image block) and the upper boundary of the image block to the first endpoint b; and m indicates the distance from the intersection c between the triangle boundary (the triangle boundary is a hypotenuse not on the boundary of the image block) and the left boundary of the image block to the second endpoint d. As shown in FIG. 5(B), when the partition manner (2) is selected, two position parameters are (xpos, ypos), in which xpos = m, ypos = n, m indicates the distance from the intersection c between the triangle boundary (the triangle boundary is a hypotenuse not on the boundary of the image block) and the lower boundary of the image block to the second endpoint d; and n indicates the distance from the intersection a between the triangle boundary (the triangle boundary is a hypotenuse not on the boundary of the image block) and the right boundary of the image block to the first endpoint b. As shown in FIG. 5(C), when the partition manner (3) is selected, two position parameters are (xpos, ypos), in which xpos = -m, ypos = n, n indicates the distance from the intersection a between the triangle boundary (the triangle boundary is a hypotenuse not on the boundary of the image block) and the upper boundary of the image block to the third endpoint b; and m indicates the distance from the intersection c between the triangle boundary (the triangle boundary is a hypotenuse not on the boundary of the image block) and the right boundary of the image block to the fourth endpoint d. As shown in FIG. 5(D), when the partition manner (4) is selected, it is determined that the parameters for identifying the partition manner of the image block are (xpos, ypos), in which xpos = m, ypos = -n, m indicates the distance from the intersection c between the triangle boundary (the triangle boundary is a hypotenuse not on the boundary of the image block) and the lower boundary of the image block to the fourth endpoint d; and n indicates distance from the intersection a between the triangle boundary (the triangle boundary is a hypotenuse not on the boundary of the image block) and the left boundary of the image block to the third endpoint b.

Specifically, the values of m and n may use pixel as a unit and may also be the quotient obtained through partition of the corresponding distance and the step size of value, where the step size of value may be fixed or may also be adjustable, which may be adjusted according to the resolution or content of a current image and may also be a preset value.

Step 603: The encoder searches the reference image for a prediction block, where the prediction block is an image block that most matches with the irregular sub-image block obtained by performing partition.

Step 604: The encoder acquires a residual and motion vector information according to the irregular sub-image block obtained by performing partition and the corresponding prediction block.

The residual is an error of pixel values of corresponding pixel points of the irregular sub-image block obtained by performing partition and the prediction block, and the motion vector information indicates a position difference of the irregular sub-image block and the prediction block.

Step 605: The encoder performs transform and quantization on the residual, and performs entropy encoding on the value and data header that are obtained after the transform and quantization are performed on the residual to obtain a bitstream.

The data header includes: motion vector information, set of parameters for identifying partition manners, a sequence header, an image group header, an image header, a slice group header, a macro block header, and the like.

In the embodiment, as the specific values of xpos and ypos depend on the step size of value, for a high-resolution image or an some images of special contents, very fine partition might be unnecessary, so that the step size of value may be carried in the sequence header, the image group header, the image header, the slice group header, and the macro block header, and the step size of value may indicate the values of xpos and ypos in a code word mapping table.

It is found through the statistics of multiple partition manners of image blocks E, xpos and ypos conform to a certain rule. According to the rule obtained through statistics, different code words are allocated to the values of xpos and ypos. To reduce the bit count of position parameters (xpos and ypos) for identification, the step size of value for xpos and ypos is 2, the mappings between the values of xpos and ypos and code words are shown in Table 1 and Table 2 (Table 1 and Table 2 are referred to as a first-type code word mapping table). The code words in the tables reflect statistical probabilities of different values of xpos and ypos. The probability that xpos or ypos corresponding to a code word 1 larger than a code word 2 occurs is smaller than the probability that xpos or ypos corresponding to the code word 2, namely, the probability that xpos or ypos corresponding to a large code word occurs is smaller than or equal to the probability that xpos or ypos corresponding to a small code word occurs. Therefore, xpos or ypos with a high probability of occurrence is indicated by a small code word, so as to further enhancing the encoding efficiency.

**Table 1**

| | | | | | | | | |
|---|---|---|---|---|---|---|---|---|
| **Value of xpos** | 0 | 2 | 4 | 6 | 8 | 10 | 12 | 14 |
| **Code word** | 0 | 12 | 8 | 4 | 5 | 10 | 13 | 2 |
| **Value of xpos** | -2 | -4 | -6 | -8 | -10 | -12 | -14 | -16 |
| **Code word** | 3 | 14 | 11 | 6 | 7 | 9 | 15 | 1 |

**Table 2**

| | | | | | | | | |
|---|---|---|---|---|---|---|---|---|
| **Value of ypos** | 2 | 4 | 6 | 8 | 10 | 12 | 14 | 16 |
| **Code word** | 0 | 12 | 8 | 4 | 5 | 10 | 13 | 2 |
| **Value of ypos** | 0 | -2 | -4 | -6 | -8 | -10 | -12 | -14 |
| **Code word** | 3 | 14 | 11 | 6 | 7 | 9 | 15 | 1 |

In the step, the encoder finds a corresponding code word in Table 1 according to the value of xpos, finds a corresponding code word in Table 2 according to the value of ypos, and a conventional variable length encoding method such as huffman coding, exponential-Golomb coding, and unary coding is used to encode the corresponding code word, thereby achieving the object of saving the encoding efficiency.

Alternatively, form xpos and ypos into one two-dimensional data pair (xpos, ypos), design a code table, and map (xpos, ypos) to one code word. For a 16x16 block E, when the step size of value is 4, the mapping table for two-dimensional mapping thereof is shown in Table 3. Table 3 is referred to as a second-type code word mapping table.

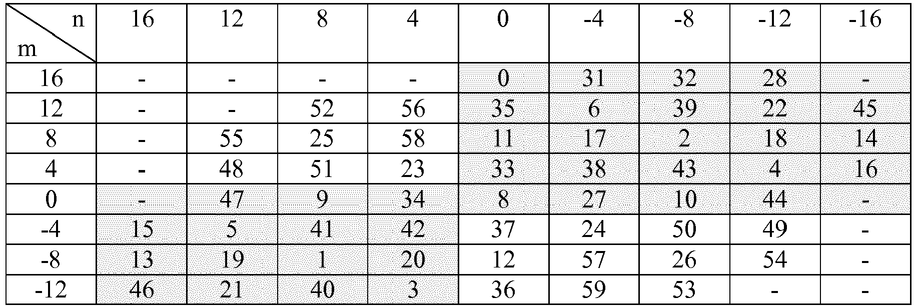

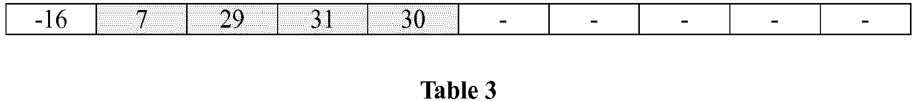

In the step, the encoder finds a corresponding code word in Table 3 according to the values of xpos and ypos, and a conventional variable length encoding method such as huffman coding, exponential-Golomb coding, and unary coding is used to encode the corresponding code word, thereby achieving the object of saving the encoding efficiency.

Step 606: The decoder acquires the bitstream, parses the bitstream to obtain a set of parameters for identifying the partition manner of an image block, motion vector information, and a residual.

Step 607: When neither the absolute value of the first position parameter nor the absolute value of the second position parameter is 0, determine that one sub-image block obtained by partitioning the image block is a triangle and another sub-image block is a pentagon; determine the position of the triangle in the image block according to the sign of the first position parameter and the sign of the second position parameter; according to the absolute value of the first position parameter, the absolute value of the second position parameter, and the position of the triangle in the image block, determine endpoint information of the triangle boundary to further obtain two sub-image blocks; when both the absolute value of the first position parameter and the absolute value of the second position parameter are 0, determine that the sub-image blocks obtained by partitioning the image block are two triangles; and according to the third position parameter, determine whether the partition manner at 45 degrees from upper right to lower left or the partition manner at 45 degrees from upper left to lower right is selected for the image block to obtain two sub-image blocks.

Specifically, if xpos is not equal to 0 and ypos is not equal to 0, the decoder learns that the image block is partitioned into one triangle and one pentagon; according to the sign of xpos and the sign of ypos, determines the position of the triangle in the image block and two reference endpoints; according to the absolute value of xpos, the absolute value of ypos, and the two reference endpoints, determines endpoint information of the two acute-angle positions of the triangle, namely, the horizontal and vertical coordinates of the point a and the point c in FIGs. 5(A), 5(B), 5(C), and 5(D).

The process of determining the image block partition manner and two reference endpoint according to the sign of xpos and the sign of ypos may include: when xpos<0 and ypos<0, the sub-image block at the upper left corner in the image block is a triangle, and two reference endpoints include a first endpoint and a second endpoint; when xpos>0 and ypos>0, the sub-image block at the lower right corner in the image block is a triangle, and two reference endpoints include a first endpoint and a second endpoint; when xpos<0 and ypos>0, the sub-image block at the upper right corner in the image block is a triangle, and the two reference endpoints include a third endpoint and a fourth endpoint; and when xpos>0 and ypos<0, the sub-image block at the lower left corner in the image block is a triangle, and two reference endpoints include a third endpoint and a fourth endpoint.

In addition, the process of determining the partition manner of the image block and two reference endpoints according to the sign of xpos and the sign of ypos may include: when xpos<0 and ypos>0 or xpos>0 and ypos>0 or xpos>0 and ypos<0, the sub-image block at the upper left corner in the image block is a triangle, and the two reference endpoints include a first endpoint and a second endpoint; when xpos>0 and ypos<0 or xpos<0 and ypos<0 or xpos<0 and ypos>0, the sub-image block at the lower right corner in the image block is a triangle, and the two reference endpoints include a first endpoint and a second endpoint; when xpos<0 and ypos<0 or xpos>0 and ypos>0 or xpos>0 and ypos<0, the sub-image block at the upper right corner in the image block is a triangle, and the two reference endpoints include a third endpoint and a fourth endpoint; when xpos>0 and ypos>0 or xpos<0 and ypos<0 or xpos<0 and ypos>0, the sub-image block at the lower left corner in the image block is a triangle, and the two reference endpoints include a third endpoint and a fourth endpoint.

When xpos is equal to 0 and ypos is equal to 0, the decoder may learn that the image block is partitioned into two triangles of the same size, and here then acquires from the bitstream a third position parameter used for determining whether a partition manner from lower left to upper right or a partition manner from lower right to upper left is selected for the image block.

Step 608: The decoder acquires two prediction blocks in the reference image according to the determined partition manner of an image block by the encoder and the motion vector information, where the two prediction blocks are prediction blocks corresponding to two sub-image blocks for which irregular partition is selected.

Step 609: The decoder acquires, according to the residual and the prediction block, the pixel value of each pixel in the irregular sub-image block obtained by partitioning the image block.

In the embodiment of the present invention, the image block to be encoded is partitioned into one triangle and one pentagon or two triangles, which makes it convenient to find a suitable prediction block in the reference image and achieves a very small error between the found prediction block and the sub-image block obtained by performing partition, thereby enhancing the encoding efficiency of an image block.

In consideration of the high probability of using irregular blocks obtained by performing partition at 45 degrees in practical encoding and in such a partition manner the absolute values of the xpos and ypos are equal, to save the encoding bits of the set of parameters for identifying the partition manner, the methods introduced in the following embodiments may be selected to identify that the partition manner at 45 degrees is selected for the image block.

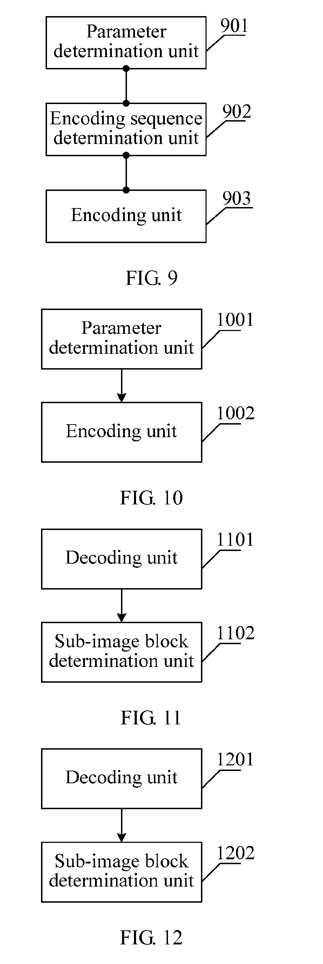

Referring to FIG. 9, an embodiment of the present invention provides an image encoding device, which includes:
a parameter determination subunit, configured to: when a partition manner at 45 degrees from upper right to lower left or a partition manner at 45 degrees from upper left to lower right is selected, determine that the absolute value of the first position parameter is a second-type numerical value; and a third parameter determination subunit, configured to: when a partition manner at 45 degrees from upper right to lower left is selected, determine the sign of the first position parameter according to which one of the sub-image block at the upper left corner and the sub-image block at the lower right corner in the image block is a triangle; when the partition manner at 45 degrees from upper left to lower right is selected for partition, determine the sign of the first position parameter according to which one of the sub-image block at the lower left corner and the sub-image block at the upper right corner in the image block is a triangle; and a fourth parameter determination subunit, configured to: according to the intersection information of the triangle boundary and the boundary of the image block, determine a second position parameter, where the triangle boundary is not on the boundary of the image block.

Referring to FIG. 10, another embodiment of the present invention provides an image encoding device, which includes:
a parameter determination unit 1001, configured to: for a sub-image block obtained by partitioning an image block, determine at least two position parameters, where the at least two position parameters include a first position parameter and a second position parameter, the absolute value of the first position parameter and the absolute value of the second position parameter each identify the distance from an endpoint of a boundary of the sub-image block to a corresponding reference endpoint, the boundary of the sub-image block is not on a boundary of the image block, the corresponding reference endpoint is an endpoint on the image block that is located on a same boundary as the endpoint of the boundary of the sub-image block, and the sign of the first position parameter and the sign of the second position parameter jointly identify the position of the sub-image block in the image block; and
an encoding unit 1002, configured to encode the at least two position parameters.

Specifically, the parameter determination unit 1001 includes:
a parameter determination subunit 1, configured to: according to endpoint information of the boundary of the sub-image block, the partition manner of an image block, and two reference endpoints, determine the position of a sub-image block in an image block, the absolute value of the first position parameter, and the absolute value of the second position parameter; where when the sub-image block at the upper left corner or sub-image block at the lower right corner in the image block is a triangle, two reference endpoints include a first endpoint and a second endpoint, in which the first endpoint is the intersection between the upper boundary and the right boundary of the image block; the second endpoint is the intersection between the lower boundary and the left boundary of the image block; when the sub-image block at the upper right corner or the sub-image block at the lower left corner in the image block is a triangle, the two reference endpoints include: a third endpoint and a fourth endpoint, the third endpoint is the intersection between the upper boundary and the left boundary of the image block, and the fourth endpoint is the intersection between the lower boundary and the right boundary of the image block;
a parameter determination subunit 2, configured to: according to the position of the sub-image block in the image block, determine the sign of the first position parameter and the sign of the second position parameter; and
a parameter determination subunit 3, configured to: when both the first position parameter and the second position parameter are 0, determine a third position parameter according to whether the partition manner of the image block is a partition manner from lower left to upper right or a partition manner from lower right to upper left.

Specifically, the encoding unit 1002 is configured to search a preset first-type code word mapping table for their respective code words of the position parameters; where in the first-type code word mapping table, a probability that a position parameter to which a code 1 greater than a code 2 corresponds occurs is smaller than a probability that a position parameter to which the code word 2 corresponds occurs; or, search a preset second-type code word mapping table for one code word corresponding to the first position parameter and the second position parameter.

The embodiment of the present invention selects at least two position parameters to identify a sub-image block obtained by partitioning an image block, in which the absolute values of the two position parameters identify the distance from an endpoint of a boundary of the sub-image block to a corresponding reference endpoint, the boundary of the sub-image block is not on a boundary of the image block, the signs of the two position parameters jointly identify the position of the sub-image block in the image block, and by using the two position parameters, instead of being limited to an angle like 45 degrees, any partition type may be identified when a partition manner from lower right to upper left or from lower left to upper right is selected.

Referring to FIG. 11, an embodiment of the present invention provides an image decoding device, which includes:
a decoding unit 1101, configured to acquire a bitstream, and decode at least two position parameters from the bitstream, where the at least two position parameters include a first position parameter and a second position parameter, the first position parameter identifies whether a sub-image block obtained by partitioning an image block is a rectangle or not a rectangle, and the second position parameter identifies endpoint information of the sub-image block; and
a sub-image block determination unit 1102, configured to determine, according to the at least two position parameters and a decoding sequence of the at least two position parameters, information of the sub-image block obtained by partitioning the image block.

Referring to FIG. 12, another embodiment of the present invention provides an image decoding device, which includes:
a decoding unit 1201, configured to acquire a bitstream and decode at least two position parameters from the bitstream, where the at least two position parameters include a first position parameter and a second position parameter, the absolute value of the first position parameter and the absolute value of the second position parameter each identify the distance from an endpoint of a boundary of the sub-image block to a corresponding reference endpoint, the boundary of the sub-image block is not on a boundary of the image block, the corresponding reference endpoint is an endpoint on the image block that is located on a same boundary as the endpoint of the boundary of the sub-image block, and the sign of the first position parameter and the sign of the second position parameter jointly identify the position of the sub-image block in the image block; and
a sub-image block determination unit 1202, configured to determine, according to the at least two position parameters, information of the sub-image block obtained by partitioning the image block.

The sub-image block determination unit 1202 includes:
a sub-image block determination subunit 1, configured to: when both the absolute value of the first position parameter and the absolute value of the second position parameter are not zero, determine that one sub-image block obtained by partitioning the image block is a triangle and another sub-image block is a pentagon;
a sub-image block determination subunit 2, configured to determine the position of the triangle in the image block according to the sign of the first position parameter and the sign of the second position parameter; and
a sub-image block determination subunit 3, configured to: according to the absolute value of the first position parameter, the absolute value of the second position parameter, and the position of the triangle in the image block, determine endpoint information of the triangle boundary, where the triangle boundary is not on a boundary of the image block.

When both the absolute value of the first position parameter and the absolute value of the second position parameter are 0, the at least two position parameters further include a third position parameter.

The sub-image block determination unit further includes:
a sub-image block determination subunit four, configured to: when both the absolute value of the first position parameter and the absolute value of the second position parameter are 0, according to the third position parameter, determine whether the partition manner at 45 degrees from upper right to lower left or the partition manner at 45 degrees from upper left to lower right is selected for the image block.

The embodiment of the present invention selects at least two position parameters to identify a sub-image block obtained by partitioning an image block, in which the absolute values of the two position parameters identify the distance from an endpoint of a boundary of the sub-image block to a corresponding reference endpoint, the boundary of the sub-image block is not on a boundary of the image block, the signs of the two position parameters jointly identify the position of the sub-image block in the image block, and by using the two position parameters, instead of being limited to an angle like 45 degrees, any partition type may be identified when a partition manner from lower right to upper left or from lower left to upper right is selected.

Persons of ordinary skill in the art may understand that all or part of steps in the method of the foregoing embodiments may be implemented by programs instructing relevant hardware, and the programs may be stored in a computer readable storage medium, such as a Read-Only Memory (ROM), a magnetic disc, or an optical disc.

The handover control method, apparatus, and system according to the embodiments of the present invention are described in detail above. The principle and implementation of the present invention are described herein through specific examples. The description about the embodiments of the present invention is merely provided for ease of understanding of the method and core ideas of the present invention. Persons of ordinary skill in the art can make variations and modifications to the present invention in terms of the specific implementations and application scopes according to the ideas of the present invention. Therefore, the specification shall not be construed as a limit to the present invention.

## Claims

1. An image encoding method, comprising:
for a sub-image block obtained by partitioning an image block, determining at least two position parameters, wherein the at least two position parameters comprise a first position parameter and a second position parameter, an absolute value of the first position parameter and an absolute value of the second position parameter each identify a distance from an endpoint of a boundary of the sub-image block to a corresponding reference endpoint, the boundary of the sub-image block is not on a boundary of the image block, the corresponding reference endpoint is an endpoint, being a intersection between boundaries of the image block, on the image block that is located on a same boundary as the endpoint of the boundary of the sub-image block, and a sign of the first position parameter and a sign of the second position parameter jointly identify the position of the sub-image block in the image block; and
encoding the at least two position parameters, wherein:
when the first position parameter and the second position parameter are both specific numerical values and therefore the image block is divided into two equal triangles, the at least two position parameters further comprise: a third position parameter;
the determining at least two position parameters further comprises:
determining the third position parameter according to whether a partition manner of the image block is a partition manner from lower left to upper right or a partition manner from lower right to upper left.

2. The method according to claim 1, wherein:
the determining at least two position parameters comprises:
according to endpoint information of the boundary of the sub-image block, a partition manner of the image block, and two reference endpoints, determining the position of the sub-image block in the image block, the absolute value of the first position parameter, and the absolute value of the second position parameter, wherein when the sub-image block at the upper left corner or the sub-image block at the lower right corner in the image block is a triangle, the two reference endpoints comprise: a first endpoint and a second endpoint, wherein the first endpoint is the intersection between the upper boundary and the right boundary of the image block, and the second endpoint is the intersection between the lower boundary and the left boundary of the image block; and when the sub-image block at the upper right corner or the sub-image block at the lower left corner in the image block is a triangle, the two reference endpoints comprise: a third endpoint and a fourth endpoint, wherein the third endpoint is the intersection between the upper boundary and the left boundary of the image block, and the fourth endpoint is the intersection between the lower boundary and the right boundary of the image block; and
according to the position of the sub-image block in the image block, determining the sign of the first position parameter and the sign of the second position parameter.

3. The method according to claim 1, wherein:
the encoding the at least two position parameters comprises:
searching a preset first-type code word mapping table for their respective code words of the position parameters, wherein, in the first-type code word mapping table, a probability that a position parameter to which a code 1 greater than a code 2 corresponds occurs is smaller than a probability that a position parameter to which the code word 2 corresponds occurs;
or
searching a preset second-type code word mapping table for one code word corresponding to the first position parameter and the second position parameter.

4. An image decoding method, comprising:
acquiring a bitstream and decoding at least two position parameters from the bitstream, wherein the at least two position parameters comprise a first position parameter and a second position parameter, an absolute value of the first position parameter and an absolute value of the second position parameter each identify a distance from an endpoint of a boundary of a sub-image block to a corresponding reference endpoint, the boundary of the sub-image block is not on a boundary of the image block, the corresponding reference endpoint is an endpoint, being a intersection between boundaries of the image block, on the image block that is located on a same boundary as the endpoint of the boundary of the sub-image block, and a sign of the first position parameter and a sign of the second position parameter jointly identify the position of the sub-image block in the image block; and
determining, according to the at least two position parameters, information of the sub-image block obtained by partitioning the image block, wherein:
when the absolute value of the first position parameter and the absolute value of the second position parameter are both specific numerical values, the at least two position parameters further comprise a third position parameter;
the determining, according to the at least two position parameters, the sub-image block obtained by partitioning the image block comprises:
according to the first position parameter and the second position parameter, determining that the sub-image blocks obtained by partitioning the image block are two equal triangles;
according to the third position parameter, determining which one of a partition manner at 45 degrees from upper right to lower left and a partition manner at 45 degrees from upper left to lower right is selected for the image block.

5. The method according to claim 4, wherein:
the determining, according to the at least two position parameters, information of the sub-image block obtained by partitioning the image block comprises:
when neither the absolute value of the first position parameter nor the absolute value of the second position parameter is a specific numerical value, determining that one sub-image block obtained by partitioning the image block is a triangle and the other is a pentagon; determining a position of the triangle in the image block according to the sign of the first position parameter and the sign of the second position parameter; determining endpoint information of a triangle boundary according to the absolute value of the first position parameter, the absolute value of the second position parameter, and the position of the triangle in the image block, wherein the triangle boundary is not on the boundary of the image block.

6. The method according to claim 4, wherein:
in the bitstream, a same code word corresponds to the first position parameter and the second position parameter;
or
in the bitstream, a code word corresponding to the first position parameter and a code word corresponding to the second position parameter are code words in a first-type code word mapping table.

7. An image encoding device, comprising:
a parameter determination unit, configured to: for a sub-image block obtained by partitioning an image block, determine at least two position parameters, wherein the at least two position parameters comprise a first position parameter and a second position parameter, an absolute value of the first position parameter and an absolute value of the second position parameter each identify a distance from an endpoint of a boundary of the sub-image block to a corresponding reference endpoint, the boundary of the sub-image block is not on a boundary of the image block, the corresponding reference endpoint is an endpoint, being a intersection between boundaries of the image block, on the image block that is located on a same boundary as the endpoint of the boundary of the sub-image block, and a sign of the first position parameter and a sign of the second position parameter jointly identify the position of the sub-image block in the image block; and
an encoding unit, configured to encode the at least two position parameters, wherein:
the parameter determination unit further comprises:
a parameter determination subunit, configured to: when the first position parameter and the second position parameter are both specific numerical values, determine a third position parameter according to whether a partition manner of the image block is a partition manner from lower left to upper right or a partition manner from lower right to upper left.

8. The device according to claim 7, wherein:
the parameter determination unit comprises:
a parameter determination subunit 1, configured to: according to endpoint information of the boundary of the sub-image block, a partition manner of the image block, and two reference endpoints, determine the position of the sub-image block in the image block, the absolute value of the first position parameter, and the absolute value of the second position parameter; wherein when the sub-image block at the upper left corner or the sub-image block at the lower right corner in the image block is a triangle, the two reference endpoints comprise: a first endpoint and a second endpoint, wherein the first endpoint is the intersection between the upper boundary and the right boundary of the image block, and the second endpoint is the intersection between the lower boundary and the left boundary of the image block; and when the sub-image block at the upper right corner or the sub-image block at the lower left corner in the image block is a triangle, the two reference endpoints comprise: a third endpoint and a fourth endpoint, the third endpoint is the intersection between the upper boundary and the left boundary of the image block, and the fourth endpoint is the intersection between the lower boundary and the right boundary of the image block; and
a parameter determination subunit 2, configured to: according to the position of the sub-image block in the image block, determine the sign of the first position parameter and the sign of the second position parameter.

9. The device according to claim 7, wherein:
the encoding unit is configured to search a preset first-type code word mapping table for their respective code words of the position parameters, wherein, in the first-type code word mapping table, a probability that a position parameter to which a code 1 greater than a code 2 corresponds occurs is smaller than a probability that a position parameter to which the code word 2 corresponds occurs; or, search a preset second-type code word mapping table for one code word corresponding to the first position parameter and the second position parameter.

10. An image decoding device, comprising:
a decoding unit, configured to acquire a bitstream and decode at least two position parameters from the bitstream, wherein the at least two position parameters comprise a first position parameter and a second position parameter, an absolute value of the first position parameter and an absolute value of the second position parameter each identify a distance from an endpoint of a boundary of a sub-image block to a corresponding reference endpoint, the boundary of the sub-image block is not on a boundary of the image block, the corresponding reference endpoint is an endpoint, being a intersection between boundaries of the image block, on the image block that is located on a same boundary as the endpoint of the boundary of the sub-image block, and a sign of the first position parameter and a sign of the second position parameter jointly identify the position of the sub-image block in the image block; and
a sub-image block determination unit, configured to: determine, according to the at least two position parameters, information of the sub-image block obtained by partitioning the image block, wherein:
when the absolute value of the first position parameter and the absolute value of the second position parameter are both specific numerical values, the at least two position parameters further comprise a third position parameter; and
the sub-image block determination unit further comprises:
a sub-image block determination subunit, configured to: when the absolute value of the first position parameter and the absolute value of the second position parameter are both specific numerical values, according to the third position parameter, determine which one of a partition manner at 45 degrees from upper right to lower left and a partition manner at 45 degrees from upper left to lower right is selected for the image block.

11. The device according to claim 10, wherein:
the sub-image block determination unit comprises:
a sub-image block determination subunit 1, configured to: when neither the absolute value of the first position parameter nor the absolute value of the second position parameter is a specific numerical value, determine that one sub-image block obtained by partitioning the image block is a triangle and the other is a pentagon;
a sub-image block determination subunit 2, configured to determine a position of the triangle in the image block according to the sign of the first position parameter and the sign of the second position parameter; and
a sub-image block determination subunit 3, configured to: according to the absolute value of the first position parameter, the absolute value of the second position parameter, and the position of the triangle in the image block, determine endpoint information of a triangle boundary, wherein the triangle boundary is not on a boundary of the image block.

## Patentansprüche

1. Bildcodierungsverfahren, das Folgendes umfasst:
für einen Teilbildblock, der durch Partitionieren eines Bildblocks erhalten wird, Bestimmen von wenigstens zwei Positionsparametern, wobei die wenigstens zwei Positionsparameter einen ersten Positionsparameter und einen zweiten Positionsparameter umfassen, ein Absolutwert des ersten Positionsparameters und
ein Absolutwert des zweiten Positionsparameters jeder einen Abstand von einem Endpunkt einer Grenze des Teilbildblocks zu einem entsprechenden Bezugsendpunkt identifizieren, die Grenze des Teilbildblocks sich nicht auf einer Grenze des Bildblocks befindet, der entsprechende Bezugsendpunkt ein Endpunkt, der ein Schnittpunkt zwischen Grenzen des Bildblocks ist, auf dem Bildblock ist, der sich auf derselben Grenze wie der Endpunkt der Grenze des Teilbildblocks befindet, und ein Vorzeichen des ersten Positionsparameters und ein Vorzeichen des zweiten Positionsparameters gemeinsam die Position des Teilbildblocks in dem Bildblock identifizieren;
Codieren der wenigstens zwei Positionsparameter, wobei:
wenn der erste Positionsparameter und der zweite Positionsparameter beide spezifische numerische Werte sind und deshalb der Bildblock in zwei gleiche Dreiecke unterteilt ist, die wenigstens zwei Positionsparameter ferner Folgendes umfassen: einen dritten Positionsparameter;
das Bestimmen der wenigstens zwei Positionsparameter ferner Folgendes umfasst: Bestimmen des dritten Positionsparameters in Übereinstimmung damit, ob eine Partitionsweise des Bildblocks eine Partitionsweise von unten links nach oben rechts oder eine Partitionsweise von unten rechts nach oben links ist.

2. Verfahren nach Anspruch 1, wobei:
das Bestimmen der wenigstens zwei Positionsparameter Folgendes umfasst:
gemäß den Endpunktinformationen der Grenze des Teilbildblocks, einer Partitionsweise des Bildblocks und den beiden Bezugsendpunkten Bestimmen der Position des Teilbildblocks in dem Bildblock, des Absolutwerts des ersten Positionsparameters und des Absolutwerts des zweiten Positionsparameters, wobei,
wenn der Teilbildblock in der oberen linken Ecke oder der Teilbildblock in der unteren rechten Ecke in dem Bildblock ein Dreieck ist, die beiden Bezugsendpunkte Folgendes umfassen: einen ersten Endpunkt und einen zweiten Endpunkt, wobei der erste Endpunkt der Schnittpunkt zwischen der oberen Grenze und der rechten Grenze des Bildblocks ist und der zweite Endpunkt der Schnittpunkt zwischen der unteren Grenze und der linken Grenze des Bildblocks ist; und wenn der Teilbildblock in der oberen rechten Ecke oder der Teilbildblock in der unteren linken Ecke in dem Bildblock ein Dreieck ist, die beiden Bezugsendpunkte Folgendes umfassen: einen dritten Endpunkt und einen vierten Endpunkt, wobei der dritte Endpunkt der Schnittpunkt zwischen der oberen Grenze und der linken Grenze des Bildblocks ist und der vierte Endpunkt der Schnittpunkt zwischen der unteren Grenze und der rechten Grenze des Bildblocks ist; und
gemäß der Position des Teilbildblocks in dem Bildblock Bestimmen des Vorzeichens des ersten Positionsparameters und des Vorzeichens des zweiten Positionsparameters.

3. Verfahren nach Anspruch 1, wobei:
das Codieren der wenigstens zwei Positionsparameter Folgendes umfasst:
Durchsuchen einer vorgegebenen Codewort-Abbildungstabelle eines ersten Typs nach ihren jeweiligen Codewörtern der Positionsparameter, wobei in der Codewort-Abbildungstabelle des ersten Typs eine Wahrscheinlichkeit, dass ein Positionsparameter, dem ein Code 1, der größer als ein Code 2 ist, entspricht, auftritt, kleiner als eine Wahrscheinlichkeit ist, dass ein Positionsparameter, dem das Codewort 2 entspricht, auftritt; oder
Durchsuchen einer vorgegebenen Codewort-Abbildungstabelle eines zweiten Typs nach einem Codewort, das dem ersten Positionsparameter und dem zweiten Positionsparameter entspricht.

4. Bilddecodierungsverfahren, das Folgendes umfasst:
Erfassen eines Bitstroms und Decodieren von wenigstens zwei Positionsparametern aus dem Bitstrom, wobei die wenigstens zwei Positionsparameter einen ersten Positionsparameter und einen zweiten Positionsparameter umfassen, ein Absolutwert des ersten Positionsparameters und ein Absolutwert des zweiten Positionsparameters jeder einen Abstand von einem Endpunkt einer Grenze eines Teilbildblocks zu einem entsprechenden Bezugsendpunkt identifizieren, die Grenze des Teilbildblocks sich nicht auf einer Grenze des Bildblocks befindet, der entsprechende Bezugsendpunkt ein Endpunkt, der ein Schnittpunkt zwischen Grenzen des Bildblocks ist, auf dem Bildblock ist, der sich auf derselben Grenze wie der Endpunkt der Grenze des Teilbildblocks befindet, und ein Vorzeichen des ersten Positionsparameters und ein Vorzeichen des zweiten Positionsparameters gemeinsam die Position des Teilbildblocks in dem Bildblock identifizieren; und
Bestimmen gemäß den wenigstens zwei Positionsparametern von Informationen über den Teilbildblock, der durch Partitionieren des Bildblocks erhalten wird, wobei:
wenn der Absolutwert des ersten Positionsparameters und der Absolutwert des zweiten Positionsparameters beide spezifische numerische Werte sind, die wenigstens zwei Positionsparameter ferner einen dritten Positionsparameter umfassen;
das Bestimmen gemäß den wenigstens zwei Positionsparametern des Teilbildblocks, der durch Partitionieren des Bildblocks erhalten wird, Folgendes umfasst:
gemäß dem ersten Positionsparameter und dem zweiten Positionsparameter Bestimmen, dass die durch Partitionieren des Bildblocks erhaltenen Teilbildblöcke zwei gleiche Dreiecke sind;
gemäß dem dritten Positionsparameter Bestimmen, welche einer Partitionsweise bei 45 Grad von oben rechts nach unten links und einer Partitionsweise bei 45 Grad von oben links nach unten rechts für den Bildblock ausgewählt ist.

5. Verfahren nach Anspruch 4, wobei:
das Bestimmen gemäß den wenigstens zwei Positionsparametern von Informationen über den Teilbildblock, der durch Partitionieren des Bildblocks erhalten wird, Folgendes umfasst:
wenn weder der Absolutwert des ersten Positionsparameters noch der Absolutwert des zweiten Positionsparameters ein spezifischer numerischer Wert ist, Bestimmen, dass ein Teilbildblock, der durch Partitionieren des Bildblocks erhalten wird, ein Dreieck ist und der andere ein Fünfeck ist; Bestimmen einer Position des Dreiecks in dem Bildblock gemäß dem Vorzeichen des ersten Positionsparameters und dem Vorzeichen des zweiten Positionsparameters; Bestimmen der Endpunktinformationen einer Dreiecksgrenze gemäß dem Absolutwert des ersten Positionsparameters, dem Absolutwert des zweiten Positionsparameters und der Position des Dreiecks in dem Bildblock, wobei sich die Dreiecksgrenze nicht auf der Grenze des Bildblocks befindet.

6. Verfahren nach Anspruch 4, wobei:
in dem Bitstrom ein gleiches Codewort dem ersten Positionsparameter und dem zweiten Positionsparameter entspricht;
oder
in dem Bitstrom ein Codewort, das dem ersten Positionsparameter entspricht, und ein Codewort, das dem zweiten Positionsparameter entspricht, Codewörter in einer Codewort-Abbildungstabelle eines ersten Typs sind.

7. Bildcodierungsvorrichtung, die Folgendes umfasst:
eine Parameterbestimmungseinheit, die konfiguriert ist: für einen Teilbildblock, der durch Partitionieren eines Bildblocks erhalten wird, wenigstens zwei Positionsparameter zu bestimmen, wobei die wenigstens zwei Positionsparameter einen ersten Positionsparameter und einen zweiten Positionsparameter umfassen, ein Absolutwert des ersten Positionsparameters und ein Absolutwert des zweiten Positionsparameters jeder einen Abstand von einem Endpunkt einer Grenze des Teilbildblocks zu einem entsprechenden Bezugsendpunkt identifizieren, die Grenze des Teilbildblocks sich nicht auf einer Grenze des Bildblocks befindet, der entsprechende Bezugsendpunkt ein Endpunkt, der ein Schnittpunkt zwischen Grenzen des Bildblocks ist, auf dem Bildblock ist, der sich auf derselben Grenze wie der Endpunkt der Grenze des Teilbildblocks befindet, und ein Vorzeichen des ersten Positionsparameters und ein Vorzeichen des zweiten Positionsparameters gemeinsam die Position des Teilbildblocks in dem Bildblock identifizieren; und
eine Codierungseinheit, die konfiguriert ist, die wenigstens zwei Positionsparameter zu codieren, wobei:
die Parameterbestimmungseinheit ferner Folgendes umfasst:
eine Parameterbestimmungs-Untereinheit, die konfiguriert ist: wenn der erste Positionsparameter und der zweite Positionsparameter beide spezifische numerische Werte sind, einen dritten Positionsparameter in Übereinstimmung damit, ob eine Partitionsweise des Bildblocks eine Partitionsweise von unten links nach oben rechts oder eine Partitionsweise von unten rechts nach oben links ist, zu bestimmen.

8. Vorrichtung nach Anspruch 7, wobei:
die Parameterbestimmungseinheit Folgendes umfasst:
eine Parameterbestimmungs-Untereinheit 1, die konfiguriert ist: gemäß den Endpunktinformationen der Grenze des Teilbildblocks, einer Partitionsweise des Bildblocks und den beiden Bezugsendpunkten die Position des Teilbildblocks in dem Bildblock, den Absolutwert des ersten Positionsparameters und den Absolutwert des zweiten Positionsparameters zu bestimmen, wobei, wenn der Teilbildblock in der oberen linken Ecke oder der Teilbildblock in der unteren rechten Ecke in dem Bildblock ein Dreieck ist, die beiden Bezugsendpunkte Folgendes umfassen: einen ersten Endpunkt und einen zweiten Endpunkt, wobei der erste Endpunkt der Schnittpunkt zwischen der oberen Grenze und der rechten Grenze des Bildblocks ist und der zweite Endpunkt der Schnittpunkt zwischen der unteren Grenze und der linken Grenze des Bildblocks ist; und wenn der Teilbildblock in der oberen rechten Ecke oder der Teilbildblock in der unteren linken Ecke in dem Bildblock ein Dreieck ist, die beiden Bezugsendpunkte Folgendes umfassen: einen dritten Endpunkt und
einen vierten Endpunkt, wobei der dritte Endpunkt der Schnittpunkt zwischen der oberen Grenze und der linken Grenze des Bildblocks ist und der vierte Endpunkt der Schnittpunkt zwischen der unteren Grenze und der rechten Grenze des Bildblocks ist;
und
eine Parameterbestimmungs-Untereinheit 2, die konfiguriert ist: gemäß der Position des Teilbildblocks in dem Bildblock das Vorzeichen des ersten Positionsparameters und das Vorzeichen des zweiten Positionsparameters zu bestimmen.

9. Vorrichtung nach Anspruch 7, wobei:
die Codiereinheit konfiguriert ist, eine vorgegebene Codewort-Abbildungstabelle eines ersten Typs nach ihren jeweiligen Codewörtern der Positionsparameter zu durchsuchen, wobei in der Codewort-Abbildungstabelle des ersten Typs eine Wahrscheinlichkeit, dass ein Positionsparameter, dem ein Code 1, der größer als ein Code 2 ist, entspricht, auftritt, kleiner als eine Wahrscheinlichkeit ist, dass ein Positionsparameter, dem das Codewort 2 entspricht, auftritt; oder eine vorgegebene Codewort-Abbildungstabelle eines zweiten Typs nach einem Codewort, das dem ersten Positionsparameter und dem zweiten Positionsparameter entspricht, zu durchsuchen.

10. Bilddecodierungsvorrichtung, die Folgendes umfasst:
eine Decodierungseinheit, die konfiguriert ist, einen Bitstrom zu erfassen und wenigstens zwei Positionsparameter aus dem Bitstrom zu decodieren, wobei die wenigstens zwei Positionsparameter einen ersten Positionsparameter und einen zweiten Positionsparameter umfassen, ein Absolutwert des ersten Positionsparameters und ein Absolutwert des zweiten Positionsparameters jeder einen Abstand von einem Endpunkt einer Grenze eines Teilbildblocks zu einem entsprechenden Bezugsendpunkt identifizieren, die Grenze des Teilbildblocks sich nicht auf einer Grenze des Bildblocks befindet, der entsprechende Bezugsendpunkt ein Endpunkt, der ein Schnittpunkt zwischen Grenzen des Bildblocks ist, auf dem Bildblock ist, der sich auf derselben Grenze wie der Endpunkt der Grenze des Teilbildblocks befindet, und ein Vorzeichen des ersten Positionsparameters und ein Vorzeichen des zweiten Positionsparameters gemeinsam die Position des Teilbildblocks in dem Bildblock identifizieren; und
eine Teilbildblock-Bestimmungseinheit, die konfiguriert ist: gemäß den wenigstens zwei Positionsparametern Informationen über den Teilbildblock, der durch Partitionieren des Bildblocks erhalten wird, zu bestimmen, wobei:
wenn der Absolutwert des ersten Positionsparameters und der Absolutwert des zweiten Positionsparameters beide spezifische numerische Werte sind, die wenigstens zwei Positionsparameter ferner einen dritten Positionsparameter umfassen; und
die Teilbildblock-Bestimmungseinheit ferner Folgendes umfasst:
eine Teilbildblock-Bestimmungsuntereinheit, die konfiguriert ist: wenn der Absolutwert des ersten Positionsparameters und der Absolutwert des zweiten Positionsparameters beide spezifische numerische Werte sind, gemäß dem dritten Positionsparameter zu bestimmen, welche einer Partitionsweise bei 45 Grad von oben rechts nach unten links und einer Partitionsweise bei 45 Grad von oben links nach unten rechts für den Bildblock ausgewählt ist.

11. Vorrichtung nach Anspruch 10, wobei:
die Teilbildblock-Bestimmungseinheit Folgendes umfasst:
eine Teilbildblock-Bestimmungsuntereinheit 1, die konfiguriert ist: wenn weder der Absolutwert des ersten Positionsparameters noch der Absolutwert des zweiten Positionsparameters ein spezifischer numerischer Wert ist, zu bestimmen, dass ein Teilbildblock, der durch Partitionieren des Bildblocks erhalten wird, ein Dreieck ist und der andere ein Fünfeck ist;
eine Teilbildblock-Bestimmungsuntereinheit 2, die konfiguriert ist: eine Position des Dreiecks in dem Bildblock gemäß dem Vorzeichen des ersten Positionsparameters und dem Vorzeichen des zweiten Positionsparameters zu bestimmen; und
eine Teilbildblock-Bestimmungsuntereinheit 3, die konfiguriert ist: gemäß dem Absolutwert des ersten Positionsparameters, dem Absolutwert des zweiten Positionsparameters und der Position des Dreiecks in dem Bildblock die Endpunktinformationen einer Dreiecksgrenze zu bestimmen, wobei sich die Dreiecksgrenze nicht auf einer Grenze des Bildblocks befindet.

## Revendications

1. Procédé de codage d'image, comprenant les étapes suivantes :
pour un bloc de sous-image obtenu en partitionnant un bloc d'image, déterminer au moins deux paramètres de position, où les au moins deux paramètres de position comprennent un premier paramètre de position et un deuxième paramètre de position,
une valeur absolue du premier paramètre de position et une valeur absolue du deuxième paramètre de position, chacune identifiant une distance d'un point d'extrémité d'une limite du bloc de sous-image à un point d'extrémité de référence correspondant, la limite du bloc de sous-image ne se situe pas sur une limite du bloc d'image, le point d'extrémité de référence correspondant est un point d'extrémité,
étant une intersection entre des limites du bloc d'image, sur le bloc d'image qui est situé sur une même limite que le point d'extrémité de la limite du bloc de sous-image, et un signe du premier paramètre de position et un signe du deuxième paramètre de position identifient ensemble la position du bloc de sous-image dans le bloc d'image ; et
coder les au moins deux paramètres de position, où :
lorsque le premier paramètre de position et le deuxième paramètre de position sont tous les deux des valeurs numériques spécifiques, et donc lorsque le bloc d'image est divisé en deux triangles égaux, les au moins deux paramètres de position comprennent en outre : un troisième paramètre de position ;
déterminer au moins deux paramètres de position comprend en outre l'étape suivante :
déterminer le troisième paramètre de position conformément au fait qu'une manière de partitionner le bloc d'image est une manière de partitionner d'en bas à gauche à en haut à droite, ou une manière de partitionner d'en bas à droite à en haut à gauche.

2. Procédé selon la revendication 1, dans lequel :
déterminer au moins deux paramètres de position comprend les étapes suivantes :
conformément à des informations de point d'extrémité de la limite du bloc de sous-image, à une manière de partitionner le bloc d'image, et à deux points d'extrémité de référence, déterminer la position du bloc de sous-image dans le bloc d'image, la valeur absolue du premier paramètre de position, et la valeur absolue du deuxième paramètre de position, où lorsque le bloc de sous-image dans le coin supérieur gauche ou le bloc de sous-image dans le coin inférieur droit dans le bloc d'image est un triangle, les deux points d'extrémité de référence comprennent : un premier point d'extrémité et un deuxième point d'extrémité, où le premier point d'extrémité est l'intersection entre la limite supérieure et la limite de droite du bloc d'image, et le deuxième point d'extrémité est l'intersection entre la limite inférieure et la limite de gauche du bloc d'image ; et lorsque le bloc de sous-image dans le coin supérieur droit ou le bloc de sous-image dans le coin inférieur gauche dans le bloc d'image est un triangle, les deux points d'extrémité de référence comprennent : un troisième point d'extrémité et un quatrième point d'extrémité, où le troisième point d'extrémité est l'intersection entre la limite supérieure et la limite de gauche du bloc d'image, et le quatrième point d'extrémité est l'intersection entre la limite inférieure et la limite de droite du bloc d'image ; et
conformément à la position du bloc de sous-image dans le bloc d'image, déterminer le signe du premier paramètre de position et le signe du deuxième paramètre de position.

3. Procédé selon la revendication 1, dans lequel :
coder les au moins deux paramètres de position comprend les étapes suivantes :
rechercher dans une table de correspondance de mots de code de premier type prédéfinie les mots de code respectifs des paramètres de position, où, dans la table de correspondance de mots de code de premier type, une probabilité qu'un paramètre de position, auquel un code 1 supérieur à un code 2 correspond, survienne est inférieure à une probabilité qu'un paramètre de position auquel le mot de code 2 correspond survienne ;
ou
rechercher dans une table de correspondance de mots de code de second type prédéfinie un mot de code correspondant au premier paramètre de position et au deuxième paramètre de position.

4. Procédé de décodage d'image, comprenant les étapes suivantes :
acquérir un train de bits et décoder au moins deux paramètres de position à partir du train de bits, où les au moins deux paramètres de position comprennent un premier paramètre de position et un deuxième paramètre de position, une valeur absolue du premier paramètre de position et une valeur absolue du deuxième paramètre de position, chacune identifiant une distance d'un point d'extrémité d'une limite d'un bloc de sous-image à un point d'extrémité de référence correspondant, la limite du bloc de sous-image ne se situe pas sur une limite du bloc d'image, le point d'extrémité de référence correspondant est un point d'extrémité, étant une intersection entre des limites du bloc d'image, sur le bloc d'image qui est situé sur une même limite que le point d'extrémité de la limite du bloc de sous-image, et un signe du premier paramètre de position et un signe du deuxième paramètre de position identifient ensemble la position du bloc de sous-image dans le bloc d'image ; et
déterminer, conformément aux au moins deux paramètres de position, des informations du bloc de sous-image obtenu en partitionnant le bloc d'image, où :
lorsque la valeur absolue du premier paramètre de position et la valeur absolue du deuxième paramètre de position sont toutes deux des valeurs numériques spécifiques,
les au moins deux paramètres de position comprennent en outre un troisième paramètre de position ;
déterminer, conformément aux au moins deux paramètres de position, le bloc de sous-image obtenu en partitionnant le bloc d'image comprend les étapes suivantes :
conformément au premier paramètre de position et au deuxième paramètre de position, déterminer que les blocs de sous-image obtenus en partitionnant le bloc d'image sont deux triangles égaux ;
conformément au troisième paramètre de position, déterminer, parmi une manière de partitionner à 45 degrés d'en haut à droite à en bas à gauche et une manière de partitionner à 45 degrés d'en haut à gauche à en bas à droite, quelle manière est sélectionnée pour le bloc d'image.

5. Procédé selon la revendication 4, dans lequel :
déterminer, conformément aux au moins deux paramètres de position, des informations du bloc de sous-image obtenu en partitionnant le bloc d'image comprend les étapes suivantes :
lorsque ni la valeur absolue du premier paramètre de position, ni la valeur absolue du deuxième paramètre de position n'est une valeur numérique spécifique, déterminer qu'un bloc de sous-image obtenu en partitionnant le bloc d'image est un triangle et
que l'autre est un pentagone ; déterminer une position du triangle dans le bloc d'image conformément au signe du premier paramètre de position et au signe du deuxième paramètre de position ; déterminer des informations de point d'extrémité d'une limite de triangle conformément à la valeur absolue du premier paramètre de position, à la valeur absolue du deuxième paramètre de position et à la position du triangle dans le bloc d'image, où la limite du triangle ne se situe pas sur la limite du bloc d'image.

6. Procédé selon la revendication 4, dans lequel :
dans le train de bits, un même mot de code correspond au premier paramètre de position et au deuxième paramètre de position ;
ou,
dans le train de bits, un mot de code correspondant au premier paramètre de position et un mot de code correspondant au deuxième paramètre de position sont des mots de code contenus dans une première table de correspondance de mots de code de premier type.

7. Dispositif de codage d'image, comprenant :
une unité de détermination de paramètre, configurée, pour un bloc de sous-image obtenu en partitionnant un bloc d'image, pour déterminer au moins deux paramètres de position, où les au moins deux paramètres de position comprennent un premier paramètre de position et un deuxième paramètre de position, une valeur absolue du premier paramètre de position et une valeur absolue du deuxième paramètre de position, chacune identifiant une distance d'un point d'extrémité d'une limite du bloc de sous-image à un point d'extrémité de référence correspondant, la limite du bloc de sous-image ne se situe pas sur une limite du bloc d'image, le point d'extrémité de référence correspondant est un point d'extrémité, étant une intersection entre des limites du bloc d'image, sur le bloc d'image qui est situé sur une même limite que le point d'extrémité de la limite du bloc de sous-image, et un signe du premier paramètre de position et un signe du deuxième paramètre de position identifient ensemble la position du bloc de sous-image dans le bloc d'image ; et
une unité de codage, configurée pour coder les au moins deux paramètres de position, où :
l'unité de détermination de paramètre comprend en outre :
une sous-unité de détermination de paramètre, configurée, lorsque le premier paramètre de position et le deuxième paramètre de position sont tous les deux des valeurs numériques spécifiques, déterminer un troisième paramètre de position conformément au fait qu'une manière de partitionner le bloc d'image est une manière de partitionner d'en bas à gauche à en haut à droite, ou une manière de partitionner d'en bas à droite à en haut à gauche.

8. Dispositif selon la revendication 7, dans lequel :
l'unité de détermination de paramètre comprend :
une sous-unité de détermination de paramètre 1, configurée, conformément à des informations de point d'extrémité de la limite du bloc de sous-image, à une manière de partitionner le bloc d'image, et à deux points d'extrémité de référence, pour déterminer la position du bloc de sous-image dans le bloc d'image, la valeur absolue du premier paramètre de position, et la valeur absolue du deuxième paramètre de position ; où lorsque le bloc de sous-image dans le coin supérieur gauche ou le bloc de sous-image dans le coin inférieur droit dans le bloc d'image est un triangle, les deux points d'extrémité de référence comprennent : un premier point d'extrémité et un deuxième point d'extrémité, où le premier point d'extrémité est l'intersection entre la limite supérieure et la limite de droite du bloc d'image, et le deuxième point d'extrémité est l'intersection entre la limite inférieure et la limite de gauche du bloc d'image ; et lorsque le bloc de sous-image dans le coin supérieur droit ou le bloc de sous-image dans le coin inférieur gauche dans le bloc d'image est un triangle, les deux points d'extrémité de référence comprennent : un troisième point d'extrémité et un quatrième point d'extrémité, le troisième point d'extrémité étant l'intersection entre la limite supérieure et la limite de gauche du bloc d'image, et le quatrième point d'extrémité étant l'intersection entre la limite inférieure et la limite de droite du bloc d' image ; et
une sous-unité de détermination de paramètre 2, configurée, conformément à la position du bloc de sous-image dans le bloc d'image, pour déterminer le signe du premier paramètre de position et le signe du deuxième paramètre de position.

9. Dispositif selon la revendication 7, dans lequel :
l'unité de codage est configurée pour rechercher dans une table de correspondance de mots de code de premier type prédéfinie les mots de code respectifs des paramètres de position, où, dans la table de correspondance de mots de code de premier type, une probabilité qu'un paramètre de position, auquel un code 1 supérieur à un code 2 correspond, survienne est inférieure à une probabilité qu'un paramètre de position auquel le mot de code 2 correspond survienne ; ou rechercher dans une table de correspondance de mots de code de second type prédéfinie un mot de code correspondant au premier paramètre de position et au deuxième paramètre de position.

10. Dispositif de décodage d'image, comprenant :
une unité de décodage, configurée pour acquérir un train de bits et décoder au moins deux paramètres de position à partir du train de bits, où les au moins deux paramètres de position comprennent un premier paramètre de position et un deuxième paramètre de position, une valeur absolue du premier paramètre de position et une valeur absolue du deuxième paramètre de position, chacune identifiant une distance d'un point d'extrémité d'une limite d'un bloc de sous-image à un point d'extrémité de référence correspondant, la limite du bloc de sous-image ne se situe pas sur une limite du bloc d'image, le point d'extrémité de référence correspondant est un point d'extrémité, étant une intersection entre des limites du bloc d'image, sur le bloc d'image qui est situé sur une même limite que le point d'extrémité de la limite du bloc de sous-image, et un signe du premier paramètre de position et un signe du deuxième paramètre de position identifient ensemble la position du bloc de sous-image dans le bloc d'image ; et
une unité de détermination de bloc de sous-image, configurée pour déterminer,
conformément aux au moins deux paramètres de position, des informations du bloc de sous-image obtenu en partitionnant le bloc d'image, où :
lorsque la valeur absolue du premier paramètre de position et la valeur absolue du deuxième paramètre de position sont toutes deux des valeurs numériques spécifiques, les au moins deux paramètres de position comprennent en outre un troisième paramètre de position ; et
l'unité de détermination de bloc de sous-image comprend en outre :
une sous-unité de détermination de bloc de sous-image, configurée, lorsque la valeur absolue du premier paramètre de position et la valeur absolue du deuxième paramètre de position sont toutes les deux des valeurs numériques spécifiques, conformément au troisième paramètre de position, pour déterminer, parmi une manière de partitionner à 45 degrés d'en haut à droite à en bas à gauche et une manière de partitionner à 45 degrés d'en haut à gauche à en bas à droite, quelle manière est sélectionnée pour le bloc d'image.

11. Dispositif selon la revendication 10, dans lequel :
l'unité de détermination de bloc de sous-image comprend :
une sous-unité de détermination de bloc de sous-image 1, configurée, lorsque ni la valeur absolue du premier paramètre de position, ni la valeur absolue du deuxième paramètre de position n'est une valeur numérique spécifique, déterminer qu'un bloc de sous-image obtenu en partitionnant le bloc d'image est un triangle et que l'autre est un pentagone ;
une sous-unité de détermination de bloc de sous-image 2, configurée pour déterminer une position du triangle dans le bloc d'image conformément au signe du premier paramètre de position et au signe du deuxième paramètre de position ; et
une sous-unité de détermination de bloc de sous-image 3, configurée, conformément à la valeur absolue du premier paramètre de position, à la valeur absolue du deuxième paramètre de position et à la position du triangle dans le bloc d'image, pour déterminer des informations de point d'extrémité d'une limite de triangle, où la limite du triangle ne se situe pas sur une limite du bloc d'image.
